# FASCICULE DE BREVET EUROPEEN

(11) **EP 2 935 003 B1**
(45) Date de publication et mention de la délivrance du brevet: **19.10.2016**
(21) Numéro de dépôt: 13811509.2
(22) Date de dépôt: 19.12.2013
(51) Int. Cl.: B64C 39/02, B64D 27/24, B64D 39/00, H01R 13/62, H01R 24/38

(54) **DISPOSITIFS DE RAVITAILLEMENT EN VOL POUR SYSTÈME DE STOCKAGE ÉLECTRIQUE ET AÉRONEFS ÉQUIPÉS D'UN TEL DISPOSITIF**
BETANKUNGSVORRICHTUNG IM FLUG FÜR ELEKTRISCHES SPEICHERSYSTEM UND FLUGZEUG MIT EINER DERARTIGEN VORRICHTUNG
IN-FLIGHT REFUELLING DEVICE FOR ELECTRIC STORAGE SYSTEM AND AIRCRAFT EQUIPPED WITH SUCH A DEVICE

(30) Priorité: 21.12.2012 FR 1262655
(43) Date de publication de la demande: 28.10.2015
(73) Titulaire: European Aeronautic Defence And Space Company Eads France, 75016 Paris (FR)
(72) Inventeur: SMAOUI, Hichem, 75014 Paris (FR); NESPOULOUS, Charles, 92210 Saint-cloud (FR); RECHAIN, Bruno, 75015 Paris (FR); JOUBERT, Emmanuel, 92130 Issy Les Moulineaux (FR); ESTEYNE, Didier, 17600 Saujon (FR)
(74) Mandataire: Ipside
(86) Numéro de dépôt international: PCT/EP2013/077306
(87) Numéro de publication internationale: WO 2014/096144

(56) Documents cités:
- WO-A1-95/11828
- WO-A1-2008/097669
- WO-A1-2012/125639
- US-A- 2 582 609
- US-A1- 2007 025 809
- US-A1- 2009 045 290
- US-B1- 7 543 780
- US-B1- 7 714 536
- Yates, Chip: "Our Plan: An Electric Airplane that Flies Forever", , 27 février 2012 (2012-02-27), XP002711838, Extrait de l'Internet: URL:http://www.flightofthecentury.com/elec tric-plane-flies-forever/ [extrait le 2013-08-23]

## Description

### Arrière plan de l'invention:

### Domaine de l'invention:

La présente invention concerne un dispositif de ravitaillement en vol d'un aéronef à propulsion électrique qui comporte un système de stockage électrique embarqué, un aéronef équipé d'un tel dispositif et un procédé de recharge de batteries d'un aéronef à propulsion électrique. Le dispositif prévoit des aéronefs chargeurs, des aéronefs susceptibles d'être rechargés et des moyens de raccordement appropriés.

### Arrière plan technologique:

Depuis le lancement des batteries à base de Lithium sur le marché, on voit émerger de plus en plus de démonstrateurs d'avions ou d'hélicoptères fonctionnant à l'énergie électrique stockée sous forme électrochimique dans des batteries.

On voit clairement que la puissance des moteurs électriques mis en jeu est très importante ce qui nécessite donc un apport très conséquent en énergie électrique embarquée.

Le problème est qu'à court voire à moyen terme, les technologies de batteries ne permettront pas aux aéronefs électriques d'atteindre des autonomies similaires à leurs homologues utilisant de l'essence ou du kérosène.

Pour accroître le rayon d'action de tels aéronefs, la société américaine Flight of the Century propose de réaliser un aéronef de type vaisseau mère à propulsion électrique volant continûment et capable de recevoir des dispositifs volants sous forme de drones supports de batteries qui viennent compléter le vaisseau mère et l'alimenter.

Une fois déchargé, le drone se sépare du vaisseau mère et plane vers une station de recharge alors qu'un autre drone vient le remplacer pour la suite du vol.

Une autre solution envisagée par cette société est de proposer des aéronefs pourvus de packs de batteries en plusieurs parties séparables et largables ce qui accroît le rayon d'action de l'appareil porteur en réduisant progressivement son poids.

D'autres études portent sur des technologies de transfert d'énergie à distance par lasers ou micro-ondes.

Les ravitaillements en vol sont connus dans le domaine des aéronefs à propulsion thermique: un avion va servir de ravitailleur et un second va venir se servir. Le ravitailleur est généralement un avion à fortes capacités pour avoir le maximum de fuel disponible pour les avions qui le rejoindront. Il traîne derrière lui un dispositif de ravitaillement en vol qui peut prendre deux formes différentes : soit une perche rigide qui sera pilotée depuis l'aéronef chargeur, soit un panier à l'extrémité d'un tuyau souple dans lequel l'avion à ravitailler viendra se ravitailler par l'intermédiaire d'une perche de ravitaillement. Ce dernier est le système retenu par l'armée de l'air française.

Le document US 2007/0025809 A1 décrit un dispositif de charge de batteries d'un aéronef comportant un bâti récepteur de l'aéronef sur une plateforme au sol ou sur un bateau.

Les documents US 2009/0045290 A1 et US 2 582 609 A décrivent des dispositifs de ravitaillement en vol d'un premier aéronef par un second aéronef en combustible liquide au moyen d'une connexion fluidique temporaires entre les deux aéronefs.

Le document WO 2012/125639 A1 traite d'un système à deux aéronefs formant un aéronef plus léger que l'air destiné à des vols longue durée, l'un des aéronef étant un aéronef support et l'autre un aéronef à charge utile.

Le document XP002711838 "Our Plan: An Electric Airplane that Flies Forever" décrit un système d'avion électrique comportant des batteries largables et des batteries ailées pouvant s'arrimer sur l'avion électrique et en assurer l'alimentation.

Les documents WO 2012/1125639 A1, WO 2008/097669 A1, WO 95/11828 A et US 7 543 780 B1 décrivent des moyens de recharger un aéronef à partir de moyens au sol.

### Brève description de l'invention:

La présente invention envisage, pour un type de mission déterminée, d'augmenter l'autonomie d'un appareil à propulsion électrique via un processus de recharge en vol. Cette opération pourrait être réitérée, sur un même vol, à plusieurs reprises.

La présente invention permet notamment d'allonger la durées de missions de l'aéronef sans augmenter la masse des batteries embarquées et sans réaliser une structure complexe de largage ou d'amarrage d'un véhicule complémentaire.

Pour ce faire, la présente invention propose un système de recharge de batteries embarquées pour un aéronef à propulsion électrique caractérisé en ce qu'il comporte un aéronef chargeur, des moyens de connexion électrique temporaire de l'aéronef chargeur vers l'aéronef à propulsion électrique et un dispositif de régulation de charge destiné à être disposé dans l'aéronef à propulsion électrique.

Avantageusement, l'aéronef chargeur et les moyens de connexion temporaire sont adaptés à fournir et transporter un courant d'alimentation du ou des moteurs de l'aéronef à propulsion électrique en sus du courant de recharge des batteries.

Les batteries embarquées comprennent préférablement des batteries à charge rapide objet de la recharge par le système de recharge.

Les moyens de connexion temporaire sont préférablement conçus pour résister aux turbulences tout en étant adapté à se déconnecter de manière sûre en cas d'urgence et en fin de ravitaillement.

Les moyens de connexion temporaire comportent avantageusement deux prises complémentaires, l'une portée par un câble souple ou une perche issue de l'aéronef chargeur, l'autre portée par un dispositif de jonction de l'aéronef à propulsion électrique, et comportent un dispositif électromagnétique de raccordement des deux prises complémentaires.

Le dispositif de régulation de charge comporte avantageusement un circuit d'équilibrage des charges sur des packs et des cellules des batteries embarquées.

Selon un premier mode de réalisation, l'aéronef chargeur est équipé d'un système de production d'énergie électrique adapté à la recharge des batteries de propulsion de l'aéronef à propulsion électrique.

Selon un mode de réalisation avantageux, le dispositif de régulation de charge est un dispositif de pilotage des batteries qui surveille, pendant la charge, le courant, la tension et les températures des cellules de batterie, est adapté à décider de se déconnecter du chargeur ou alerter le pilote qu'il faut le faire en cas de surtension, de surcharge des cellules ou de température trop élevée, est adapté à communiquer avec le chargeur de l'avion ravitailleur afin de piloter lui-même le courant de charge des batteries.

Le système de production d'énergie électrique peut comprendre un moteur thermique couplé à un générateur et/ou une pile à combustible.

Selon un mode de réalisation alternatif ou complémentaire, le système de production d'énergie électrique comprend des batteries ou un système hybride avec plusieurs sources.

Selon un mode de réalisation particulier, l'aéronef chargeur est un drone.

L'aéronef à propulsion électrique peut comporter en outre un système embarqué de génération d'énergie électrique à partir de kérosène ou d'hydrogène en tant que système de sécurité par exemple.

Selon un mode de réalisation particulièrement avantageux, l'aéronef chargeur, les moyens de connexion électrique temporaire de l'aéronef chargeur vers l'aéronef à propulsion électrique et le dispositif de régulation de charge dans l'aéronef à propulsion électrique sont adaptés à recharger l'ensemble des packs des batteries embarqués en une fois.

Selon un mode de réalisation alternatif ou complémentaire, l'aéronef chargeur est lui même à propulsion électrique.

L'invention concerne en outre un procédé de recharge de batteries d'un aéronef à propulsion électrique au moyen d'un système selon l'une quelconque des revendications précédentes pour lequel:
- l'aéronef à propulsion électrique ou son pilote détecte un faible état de charge de ses batteries et contacte l'aéronef chargeur le plus proche;
- l'aéronef à propulsion électrique ou son pilote s'assure de la parfaite connaissance des terrains de déroutement dans la zone de ravitaillement et le calcul du temps de vol pour les atteindre, il s'assure également de l'autonomie restante au moment du ravitaillement;

- l'aéronef à propulsion électrique se rapproche de l'aéronef chargeur qui lui libère un câble électrique équipé de moyens de connexion électriques temporaires compatible avec des moyens de l'aéronef à propulsion électrique;
- une connexion électrique est établie entre l'aéronef à propulsion électrique et l'aéronef chargeur;
- l'aéronef à propulsion électrique active le processus de recharge de ses batteries embarquées;
- à la fin de la recharge des batteries, l'aéronef à propulsion électrique commande la déconnexion et la libération des moyens de connexion électriques.

### Brève description des dessins:

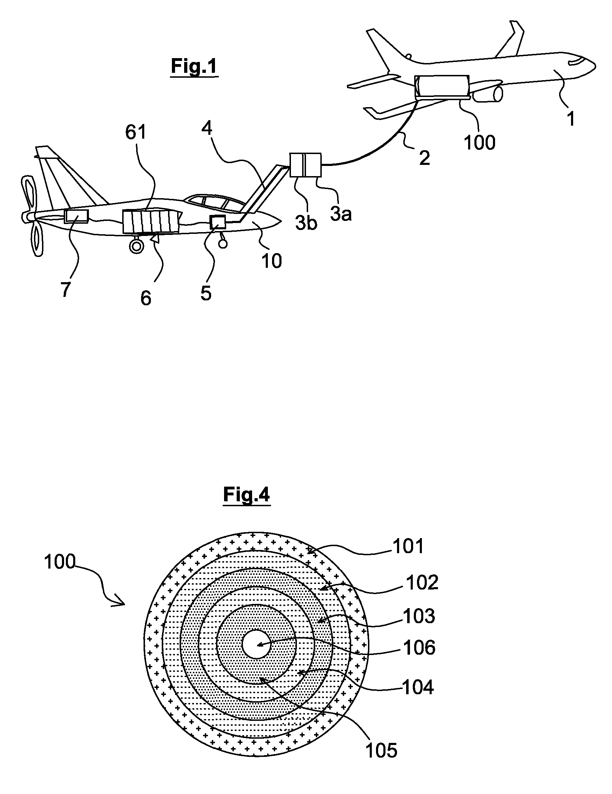

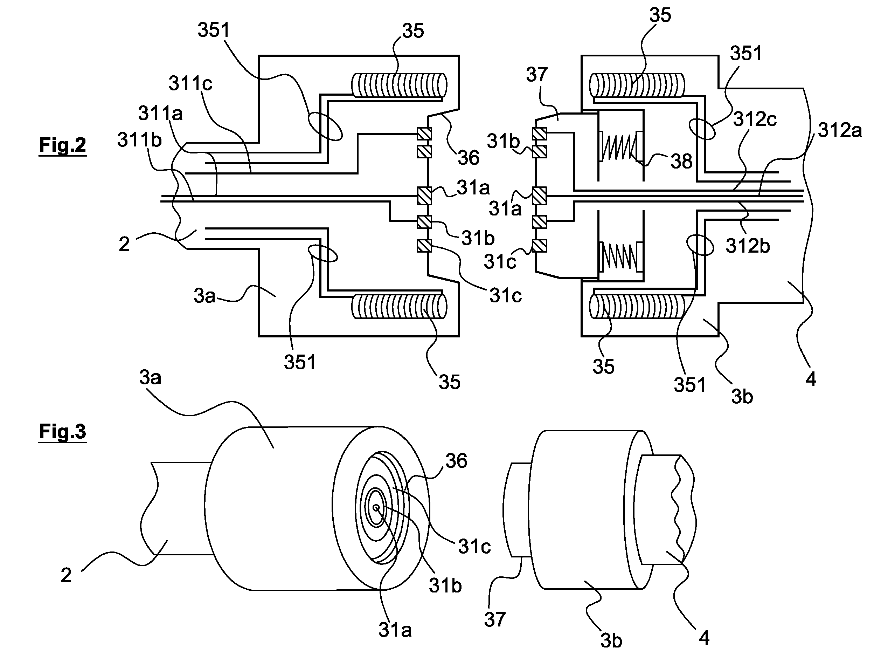

D'autres caractéristiques et avantages de l'invention seront apparents à la lecture de la description qui suit d'un exemple de réalisation non limitatif de l'invention en référence aux dessins qui représentent:
en figure 1: une vue schématique d'une étape de recharge de batteries d"un aéronef à propulsion électrique par un aéronef chargeur;
en figure 2: une vue en coupe d'un premier exemple de réalisation de moyens de connexion temporaire dans le cadre de l'invention;
en figure 3: une vue en perspective des moyens de la figure 2;
en figure 4: une vue de face d'un second exemple de moyens de connexion temporaires.

### Description détaillée de modes de réalisation de l'invention:

La présente invention propose un système de recharge de batteries embarquées 6 dans un aéronef 10 à propulsion électrique rechargeable en vol.

Le système schématisée en figure 1 comporte un aéronef chargeur 1, des moyens 2, 3a, 3b, 4 de connexion électrique temporaire de l'aéronef chargeur vers l'aéronef à propulsion électrique rechargeable en vol et un dispositif de régulation de charge 5 dans l'aéronef à propulsion électrique.

Les moyens de connexion électrique temporaire comportent selon l'exemple un câble électrique souple 2 trainé par l'aéronef chargeur, ici un avion à réaction, un premier élément de connecteur 3a au bout du câble, un second élément de connecteur 3b disposé au bout d'une perche 4 de l'aéronef 10 dont les batteries sont à recharger.

Le câble électrique peut être un câble souple se plaçant dans le lit du vent de l'aéronef chargeur et peut comme dans l'art antérieur du ravitaillement en kérosène comporter un panier pour le stabiliser et pour former un cône de guidage pour le second élément de connecteur 3b disposé au bout de la perche 4 de l'aéronef à propulsion électrique 10 dont les batteries sont à recharger.

Le câble électrique peut aussi être remplacé par une perche pilotée par un opérateur dans l'aéronef chargeur.

Les moyens de connexion temporaire comportent deux prises complémentaires 3a, 3b plus particulièrement détaillées aux figures 2 et 3.

Comme représenté en figure 2, les moyens de connexion électrique temporaire sont conçus pour résister aux turbulences tout en étant adaptés à se déconnecter de manière sûre en cas d'urgence et en fin de ravitaillement.

Pour cela, les prises complémentaires 3a, 3b comportent ici un dispositif électromagnétique de raccordement des deux prises comprenant des électroaimants 35 reliés à un dispositif de commande dans les aéronefs par des fils 351.

Selon l'exemple, les prises complémentaires comportent des profils d'accouplement coniques 36, 37 auto-centrant et des contacts 31a, 31b, 31c annulaires coaxiaux à connexion en bout.

Côté aéronef chargeurs les contacts sont reliés par des conducteurs électriques 311 a, 311 b, 311 c au dispositif de charge.

Côté aéronef à recharger, les contacts sont reliés par des conducteurs 312a, 312b, 312c au dispositif d'équilibrage de charge 5 et éventuellement au circuit d'alimentation du ou des moteurs de l'aéronef.

Ici les contacts 31 a peuvent être les contacts de masse commune au rechargement des batteries et à l'alimentation du ou des moteurs, les contacts 31 b les contacts de charge des batteries et les contacts 31 c les contacts d'alimentation des moteurs électriques de l'aéronef pendant la charge.

Il est aussi possible de considérer quatre contacts deux pour la recharge des batteries et deux pour l'alimentation des moteurs le temps de la recharge.

La connexion doit être robuste vis-à-vis des turbulences, assurer une sécurité au verrouillage et au déverrouillage après ravitaillement et permettre un désaccouplement rapide en cas d'urgence pendant la recharge. Ceci est ici permis par les moyens d'accouplement électromagnétiques.

Le montage de l'un des supports de contacts sur une platine suspendue par des ressorts 38 assure ici l'appui mutuel des contacts.

La prise de recharge électrique 3b de l'aéronef à propulsion électrique est disposée ici sur un bras 4 mais pourrait être disposée au niveau du nez de l'aéronef.

La figure 3 représente les prises, 3a côté câble et 3b côté aéronef à propulsion électrique avec les parties d'accouplement coniques 36, 37 en regard.

Pour recharger l'ensemble des packs de batteries embarqués à la fois, le circuit 5 d'équilibrage de charge sur les packs et les cellules de batteries est un circuit embarqué dans l'aéronef à propulsion électrique.

La figure 4 propose une prise 100 alternative adaptée au ravitaillement, cette prise comportant de manière concentrique de la périphérie vers le centre un dispositif annulaire magnétique 101, un contact annulaire positif 102 (une tension de 250V est envisageable), un substrat isolant 103 annulaire, une piste annulaire de masse 104, un substrat isolant annulaire 105 et un contact central de transfert de données entre le ravitailleur et le système de gestion de la charge des batteries.

L'aéronef chargeur et les moyens de connexion temporaire sont adaptés à fournir et transporter un courant d'alimentation du ou des moteurs 7 de l'aéronef à propulsion électrique en sus du courant de recharge des batteries embarquées 6 de l'aéronef à propulsion électrique. Comme vu plus haut ceci peut être fait avec un ou plusieurs contacts supplémentaires.

Le dispositif de régulation de charge 5 comporte un circuit d'équilibrage des charges sur des packs et des cellules 61 des batteries embarquées. Ceci permet de simplifier le câblage des liaisons provisoires bien que cela augmente le poids embarqué dans l'aéronef à propulsion électrique rechargeable.

Le dispositif de régulation de charge est par exemple de type BMS ("Battery Management System" en Anglais) qui est un dispositif de pilotage des batteries qui permet d'envisager plus de fonctionnalités dans le dispositif de régulation de charge des batteries.

Typiquement le BMS est un dispositif dit intelligent qui surveille, pendant la charge, le courant, la tension et les températures des cellules de batterie.

Le BMS peut décider de se déconnecter du chargeur ou alerter le pilote qu'il faut le faire en cas de surtension, de surcharge des cellules ou de température trop élevée.

Le BMS permet également de communiquer avec le chargeur de l'avion ravitailleur afin de piloter lui-même le courant de charge des batteries. Ceci peut être fait au moyen d'un bus informatique (bus CAN par exemple) ou en commande analogique. Il intègre finalement les moyens d'équilibrage actif ou passif entre les cellules composant le pack batterie.

Idéalement, l'aéronef chargeur 1, les moyens de connexion électrique temporaire 2, 3a, 3b, 4 de l'aéronef chargeur vers l'aéronef à propulsion électrique et le dispositif de régulation de charge 5 dans l'aéronef à propulsion électrique sont adaptés à recharger l'ensemble des packs des batteries embarqués en une fois.

Pour recharger les batteries de son appareil, durant le vol de l'aéronef à propulsion électrique, le pilote décide de se connecter à un aéronef chargeur ce qui lui permet de recharger ses batteries rapidement.

En fonction des batteries actuelles une estimation pour un aéronef ayant des moteurs de 2 x 10 kW, une recharge des batteries de 2 x 30 kW (250V x 120 A) et un taux de charge de 3C la durée de recharge est estimée de l'ordre de 15 mn pour une recharge à 80%.

Comme vu plus haut, l'aéronef chargeur peut également alimenter les moteurs de l'aéronef à propulsion électrique pendant la phase de recharge.

Cette alimentation peut notamment être faite au travers de câbles et de contacts dédiés 31 b afin de passer le courant et délivrer la tension nécessaires.

L'aéronef chargeur peut être un avion équipé d'un système de production d'énergie électrique 100 qui peut être un moteur thermique couplé à un générateur, une pile à combustible, des batteries ou un système hybride avec plusieurs sources.

Ce peut aussi être un drone équipé du même type de système de production d'énergie. Le drone permettrait d'avoir plus d'espace et de masse disponible pour la production de puissance électrique.

L'aéronef chargeur peut être lui même un aéronef à propulsion électrique.

Comme dans le cas du ravitaillement kérosène classique, la zone de ravitaillement doit être déterminée et connue par avance et, par conséquent, la sécurité en cas d'échec de la recharge quelle que soit la raison, est prise en compte par au moins 3 facteurs :
- L'autonomie restante au moment de la recharge;
- L'altitude de recharge;
- La parfaite connaissance des terrains de déroutement dans la zone de recharge et le calcul du temps de vol pour les atteindre.

Le système de l'invention nécessite deux pilotes formés à cet exercice ou des automatismes de pilotage adaptés à cette tâche.

Par ailleurs, le système de l'invention se conçoit dans le cadre de batteries à recharge rapide qui ont toutefois une densité d'énergie plus faible que des batteries à recharge lente ce qui fait que le bilan de masse de l'avion peut en être affecté.

Les batteries à charge rapide peuvent assurer les phases à forte demande de puissance telles que le décollage et la montée. Une fois rechargées, ces batteries permettent la poursuite du vol après recharge.

Il est toutefois possible de combiner des batteries à haute densité d'énergie, mais dans ce cas à recharge lente, pour les phases de décollage et de début de vol fortes consommatrices et des batteries à recharge rapide pour la suite du vol.

Les étapes de recharge seront alors faites sur les batteries à recharge rapide qui doivent fournir moins d'énergie que les batteries assurant le décollage.

L'invention permet une optimisation du choix des batteries en fonction des missions à réaliser.

La mise en oeuvre de l'invention se décompose en plusieurs étapes :
- L'avion à recharger 10 détecte un faible état de charge de ses batteries et contacte l'aéronef chargeur 1 le plus proche,
- L'avion à recharger 10 s'assure de La parfaite connaissance des terrains de déroutement dans la zone de ravitaillement et le calcul du temps de vol pour les atteindre. Il s'assure également de l'autonomie restante au moment du ravitaillement,
- L'avion à recharger 10 se rapproche de l'aéronef chargeur 1 qui lui libère un câble électrique 2 équipé et compatible avec la connexion électrique à verrouillage électromagnétique 3b de l'avion à recharger 10,
- L'avion à recharger 10 active le processus de recharge des batteries embarquées 6,
- A la fin de la recharge des batteries 6, l'avion 10 rechargé ralentit légèrement. La tension mécanique résultante s'appliquant sur le câble 2 permet alors la rupture de la connexion électrique 3a, 3b en développant un effort supérieur à l'attraction des électro-aimants entre les prises 3a et 3b.

L'aéronef à propulsion électrique de l'invention peut en outre comprendre un système embarqué qui permet de générer de l'énergie électrique à partir de kérosène, par exemple un turbogénérateur ou un petit moteur thermique couplé à un générateur qui permet de générer de l'énergie électrique à partir d'hydrogène par exemple une pile à combustible. Ce système permet d'améliorer l'autonomie de l'aéronef ou d'apporter une sécurité en cas de décharge complète des batteries mais il rajoute de la masse embarquée et de la complexité au système de propulsion.

A ce jour les capacités de batteries sont de l'ordre de 200 Wh/kg un taux de recharge de 2 à 4C mais on peut considérer de pouvoir concevoir un avion régional avec des batteries de 1000 Wh/kg et un taux de recharge de 10C ce qui donnerait pour une puissance moteur de 2 MW et une capacité batterie de 1,6 MWh, une durée de vol d'une heure avec une réserve de 10% et des temps de recharge de 6 à 7 mn.

Il peut en outre être envisagé d'utiliser des câbles et moteurs fonctionnant à température supraconductrice.

L'invention est applicable à tous les types d'aéronefs à propulsion électrique avions, hélicoptères, drones. Cette invention permet notamment de proposer des drones de dimensions raisonnables, capables d'assurer des missions moyenne, voire longue distance gérés dans ce cas par un système automatique embarqué en liaison avec un aéronef chargeur qui pourrait être lui-même automatique.

## Revendications

1. Système de recharge de batteries embarquées (6) pour un aéronef à propulsion électrique (10) **caractérisé en ce qu'**il comporte un aéronef chargeur (1), des moyens (2, 3a, 3b, 4) de connexion électrique temporaire de l'aéronef chargeur vers l'aéronef à propulsion électrique et un dispositif de régulation de charge (5) destiné à être disposé dans l'aéronef à propulsion électrique.

2. Système de recharge de batteries embarquées dans un aéronef à propulsion électrique selon la revendication 1 pour lequel l'aéronef chargeur et les moyens de connexion temporaire sont adaptés à fournir et transporter un courant d'alimentation du ou des moteurs (7) de l'aéronef à propulsion électrique en sus du courant de recharge des batteries embarquées (6) de l'aéronef à propulsion électrique.

3. Système de recharge de batteries embarquées dans un aéronef à propulsion électrique selon la revendication 1 ou 2 pour lequel les batteries embarquées (6) comprennent des batteries à charge rapide objet de la recharge par le système de recharge.

4. Système de recharge de batteries embarquées dans un aéronef à propulsion électrique selon la revendication 1, 2 ou 3 pour lequel les moyens de connexion électrique temporaire (2, 3a, 3b, 4) sont conçus pour résister aux turbulences tout en étant adaptés à se déconnecter de manière sûre en cas d'urgence et en fin de ravitaillement.

5. Système de recharge de batteries embarquées dans un aéronef à propulsion électrique selon la revendication 4 pour lequel les moyens de connexion temporaire comportent deux prises complémentaires (3a, 3b), l'une portée par un câble souple ou une perche (2) issus de l'aéronef chargeur, l'autre portée par un dispositif de jonction (4) de l'aéronef à propulsion électrique, et un dispositif électromagnétique de raccordement des deux prises.

6. Système de recharge de batteries embarquées dans un aéronef à propulsion électrique selon l'une quelconque des revendications précédentes pour lequel le dispositif de régulation de charge comporte un circuit d'équilibrage des charges sur des packs et des cellules (61) des batteries embarquées.

7. Système de recharge de batteries embarquées dans un aéronef à propulsion électrique selon l'une quelconque des revendications précédentes pour lequel le dispositif de régulation de charge est un dispositif de pilotage des batteries qui surveille, pendant la charge, le courant, la tension et les températures des cellules de batterie, est adapté à décider de se déconnecter du chargeur ou alerter le pilote qu'il faut le faire en cas de surtension, de surcharge des cellules ou de température trop élevée, est adapté à communiquer avec le chargeur de l'avion ravitailleur afin de piloter lui-même le courant de charge des batteries.

8. Système de recharge de batteries embarquées dans un aéronef à propulsion électrique selon l'une quelconque des revendications précédentes pour lequel l'aéronef chargeur est équipé d'un système de production d'énergie électrique (100) adapté à la recharge des batteries de propulsion de l'aéronef à propulsion électrique.

9. Système de recharge de batteries embarquées dans un aéronef à propulsion électrique selon la revendication 8 pour lequel le système de production d'énergie électrique (100) comprend un moteur thermique couplé à un générateur.

10. Système de recharge de batteries embarquées dans un aéronef à propulsion électrique selon la revendication 8 ou 9 pour lequel le système de production d'énergie électrique (100) comprend une pile à combustible.

11. Système de recharge de batteries embarquées dans un aéronef à propulsion électrique selon la revendication 8, 9 ou 10 pour lequel le système de production d'énergie électrique (100) comprend des batteries ou un système hybride avec plusieurs sources.

12. Système de recharge de batteries embarquées dans un aéronef à propulsion électrique selon l'une quelconque des revendications précédentes pour lequel l'aéronef chargeur (1) est un drone.

13. Système de recharge de batteries embarquées dans un aéronef à propulsion électrique selon l'une quelconque des revendications précédentes pour lequel l'aéronef à propulsion électrique comporte en outre un système embarqué de génération d'énergie électrique à partir de kérosène ou d'hydrogène.

14. Système de recharge de batteries embarquées dans un aéronef à propulsion électrique selon l'une quelconque des revendications précédentes pour lequel l'aéronef chargeur (1), les moyens de connexion électrique temporaire (2, 3a, 3b, 4) de l'aéronef chargeur vers l'aéronef à propulsion électrique et le dispositif de régulation de charge (5) dans l'aéronef à propulsion électrique sont adaptés à recharger l'ensemble des packs des batteries embarqués en une fois.

15. Système de recharge de batteries embarquées dans un aéronef à propulsion électrique selon l'une quelconque des revendications précédentes pour lequel l'aéronef chargeur (1) est lui même à propulsion électrique.

16. Procédé de recharge de batteries d'un aéronef à propulsion électrique au moyen d'un système selon l'une quelconque des revendications précédentes pour lequel:
- l'aéronef à propulsion électrique ou son pilote détecte un faible état de charge de ses batteries et contacte l'aéronef chargeur le plus proche;
- l'aéronef à propulsion électrique ou son pilote s'assure de la parfaite connaissance des terrains de déroutement dans la zone de ravitaillement et le calcul du temps de vol pour les atteindre et de l'autonomie restante au moment du ravitaillement;
- l'aéronef à propulsion électrique se rapproche de l'aéronef chargeur qui lui libère un câble électrique équipé de moyens de connexion électriques temporaires compatible avec des moyens de l'aéronef à propulsion électrique;
- une connexion électrique est établie entre l'aéronef à propulsion électrique et l'aéronef chargeur;
- l'aéronef à propulsion électrique active le processus de recharge de ses batteries embarquées;
- à la fin de la recharge des batteries, l'aéronef à propulsion électrique commande la déconnexion et la libération des moyens de connexion électriques.

## Patentansprüche

1. System zum Aufladen bordeigener Batterien (6) für ein Luftfahrzeug mit Elektroantrieb (10), **dadurch gekennzeichnet, dass** es ein Lade-Luftfahrzeug (1), Einrichtungen (2, 3a, 3b, 4) zur vorübergehenden elektrischen Verbindung vom Lade-Luftfahrzeug zum Luftfahrzeug mit Elektroantrieb und eine Laderegelungsvorrichtung (5) aufweist, die dazu bestimmt ist, im Luftfahrzeug mit Elektroantrieb angeordnet zu werden.

2. System zum Aufladen bordeigener Batterien in einem Luftfahrzeug mit Elektroantrieb nach Anspruch 1, wobei das Lade-Luftfahrzeug und die Einrichtungen zur vorübergehenden Verbindung geeignet sind, einen Speisestrom des oder der Motoren (7) des Luftfahrzeugs mit Elektroantrieb zusätzlich zum Aufladestrom der bordeigenen Batterien (6) des Luftfahrzeugs mit Elektroantrieb zu liefern und zu transportieren.

3. System zum Aufladen bordeigener Batterien in einem Luftfahrzeug mit Elektroantrieb nach Anspruch 1 oder 2, wobei die bordeigenen Batterien (6) Schnelllade-Batterien enthalten, die Gegenstand des Aufladens durch das Aufladesystem sind.

4. System zum Aufladen bordeigener Batterien in einem Luftfahrzeug mit Elektroantrieb nach Anspruch 1, 2 oder 3, wobei die Einrichtungen zur vorübergehenden elektrischen Verbindung (2, 3a, 3b, 4) konzipiert sind, um den Turbulenzen standzuhalten, und gleichzeitig geeignet sind, im Notfall und am Ende der Betankung sicher getrennt zu werden.

5. System zum Aufladen bordeigener Batterien in einem Luftfahrzeug mit Elektroantrieb nach Anspruch 4, wobei die Einrichtungen zur vorübergehenden Verbindung zwei komplementäre Steckverbinder (3a, 3b), von denen der eine von einer Schlauchleitung oder einer Stange (2) getragen wird, die vom Lade-Luftfahrzeug stammen, der andere von einer Verbindungsvorrichtung (4) des Luftfahrzeugs mit Elektroantrieb getragen wird, und eine elektromagnetische Anschlussvorrichtung der zwei Steckverbinder aufweisen.

6. System zum Aufladen bordeigener Batterien in einem Luftfahrzeug mit Elektroantrieb nach einem der vorhergehenden Ansprüche, wobei die Laderegelungsvorrichtung eine Ladungsausgleichschaltung auf Packs und Zellen der bordeigenen Batterien (61) aufweist.

7. System zum Aufladen bordeigener Batterien in einem Luftfahrzeug mit Elektroantrieb nach einem der vorhergehenden Ansprüche, wobei die Laderegelungsvorrichtung eine Steuervorrichtung der Batterien ist, die während des Ladens den Strom, die Spannung und die Temperaturen der Batteriezellen überwacht, die geeignet ist zu entscheiden, im Fall einer Überspannung, einer Überladung der Zellen oder einer zu hohen Temperatur sich vom Ladegerät zu trennen oder den Piloten zu warnen, dass dies zu tun ist, und geeignet ist, mit dem Ladegerät des Betankungsflugzeugs zu kommunizieren, um selbst den Ladestrom der Batterien zu steuern.

8. System zum Aufladen bordeigener Batterien in einem Luftfahrzeug mit Elektroantrieb nach einem der vorhergehenden Ansprüche, wobei das Lade-Luftfahrzeug mit einem System zur Erzeugung elektrischer Energie (100) ausgerüstet ist, das für die Aufladung der Antriebsbatterien eines Luftfahrzeugs mit Elektroantrieb geeignet ist.

9. System zum Aufladen bordeigener Batterien in einem Luftfahrzeug mit Elektroantrieb nach Anspruch 8, wobei das System zur Erzeugung elektrischer Energie (100) einen mit einem Generator gekoppelten Wärmekraftmotor enthält.

10. System zum Aufladen bordeigener Batterien in einem Luftfahrzeug mit Elektroantrieb nach Anspruch 8 oder 9, wobei das System zur Erzeugung elektrischer Energie (100) eine Brennstoffzelle enthält.

11. System zum Aufladen bordeigener Batterien in einem Luftfahrzeug mit Elektroantrieb nach Anspruch 8, 9 oder 10, wobei das System zur Erzeugung elektrischer Energie (100) Batterien oder ein Hybridsystem mit mehreren Quellen enthält.

12. System zum Aufladen bordeigener Batterien in einem Luftfahrzeug mit Elektroantrieb nach einem der vorhergehenden Ansprüche, wobei das Lade-Luftfahrzeug (1) eine Drohne ist.

13. System zum Aufladen bordeigener Batterien in einem Luftfahrzeug mit Elektroantrieb nach einem der vorhergehenden Ansprüche, wobei das Luftfahrzeug mit Elektroantrieb außerdem ein bordeigenes System zur Erzeugung elektrischer Energie ausgehend von Kerosin oder Wasserstoff aufweist.

14. System zum Aufladen bordeigener Batterien in einem Luftfahrzeug mit Elektroantrieb nach einem der vorhergehenden Ansprüche, wobei das Lade-Luftfahrzeug (1), die Einrichtungen zur vorübergehenden elektrischen Verbindung (2, 3a, 3b, 4) vom Lade-Luftfahrzeug zum Luftfahrzeug mit Elektroantrieb und die Laderegelungsvorrichtung (5) im Luftfahrzeug mit Elektroantrieb geeignet sind, die Gesamtheit der Packs der bordeigenen Batterien auf einmal aufzuladen.

15. System zum Aufladen bordeigener Batterien in einem Luftfahrzeug mit Elektroantrieb nach einem der vorhergehenden Ansprüche, wobei das Lade-Luftfahrzeug (1) selbst elektrisch angetrieben wird.

16. Verfahren zum Aufladen von Batterien eines Luftfahrzeugs mit Elektroantrieb mittels eines Systems nach einem der vorhergehenden Ansprüche, wobei:
- das Luftfahrzeug mit Elektroantrieb oder sein Pilot einen schwachen Ladezustand seiner Batterien erfasst und das am nächsten befindliche Lade-Luftfahrzeug kontaktiert;
- das Luftfahrzeug mit Elektroantrieb oder sein Pilot sich von der perfekten Kenntnis der Ausweichflugplätze in der Betankungszone und der Berechnung der Flugzeit, um sie zu erreichen, und der zum Zeitpunkt der Betankung verbleibenden Autonomie überzeugt;
- das Luftfahrzeug mit Elektroantrieb sich dem Lade-Luftfahrzeug nähert, das ihm ein mit Einrichtungen zur vorübergehenden elektrischen Verbindung ausgestattetes elektrisches Kabel freigibt, das mit Einrichtungen des Luftfahrzeugs mit Elektroantrieb kompatibel ist;
- eine elektrische Verbindung zwischen dem Luftfahrzeug mit Elektroantrieb und dem Lade-Luftfahrzeug aufgebaut wird;
- das Luftfahrzeug mit Elektroantrieb den Vorgang des Aufladens seiner bordeigenen Batterien aktiviert;
- am Ende des Aufladens der Batterien das Luftfahrzeug mit Elektroantrieb das Trennen und die Freigabe der elektrischen Verbindungseinrichtungen steuert.

## Claims

1. System for recharging on-board batteries (6) in an electrically propelled aircraft (10), **characterized in that** it comprises a charging aircraft (1), means (2, 3a, 3b, 4) for temporarily electrically connecting the charging aircraft to the electrically propelled aircraft and a charge regulation device (5) intended to be arranged in the electrically propelled aircraft.

2. System for recharging on-board batteries in an electrically propelled aircraft according to Claim 1, for which the charging aircraft and the temporary connection means are adapted to supply and transport a power supply current for the engine or engines (7) of the electrically propelled aircraft in addition to the recharging current for the on-board batteries (6) of the electrically propelled aircraft.

3. System for recharging on-board batteries in an electrically propelled aircraft according to Claim 1 or 2, for which the on-board batteries (6) comprise fast-charge batteries that are the object of the recharging by the recharging system.

4. System for recharging on-board batteries in an electrically propelled aircraft according to Claim 1, 2 or 3, for which the temporary electrical connection means (2, 3a, 3b, 4) are designed to withstand the turbulences while being suitable for being disconnected safely in case of emergency and at the end of refueling.

5. System for recharging on-board batteries in an electrically propelled aircraft according to Claim 4, for which the temporary connection means comprise two complementary plug-in connectors (3a, 3b), one borne by a flexible cable or a boom (2) from the charging aircraft, the other borne by a junction device (4) of the electrically propelled aircraft, and an electromagnetic device for coupling the two plug-in connectors.

6. System for recharging on-board batteries in an electrically propelled aircraft according to any one of the preceding claims, for which the charge regulation device comprises a circuit for balancing the charges on packs and cells (61) of the on-board batteries.

7. System for recharging on-board batteries in an electrically propelled aircraft according to any one of the preceding claims, for which the charge regulation device is a device for controlling the batteries which monitors, during the charging, the current, the voltage and the temperatures of the battery cells, is adapted to decide to disconnect from the charger or alert the pilot to do so in the case of overvoltage, overcharging of the cells or excessively high temperature, and is adapted to communicate with the charger of the refueling airplane in order to itself control the battery charging current.

8. System for recharging on-board batteries in an electrically propelled aircraft according to any one of the preceding claims, for which the charging aircraft is equipped with an electrical energy production system (100) suitable for recharging the propulsion batteries of the electrically propelled aircraft.

9. System for recharging on-board batteries in an electrically propelled aircraft according to Claim 8, for which the electrical energy production system (100) comprises a heat engine coupled to a generator.

10. System for recharging on-board batteries in an electrically propelled aircraft according to Claim 8 or 9, for which the electrical energy production system (100) comprises a fuel cell.

11. System for recharging on-board batteries in an electrically propelled aircraft according to Claim 8, 9 or 10, for which the electrical energy production system (100) comprises batteries or a hybrid system with a plurality of sources.

12. System for recharging on-board batteries in an electrically propelled aircraft according to any one of the preceding claims, for which the charging aircraft (1) is a drone.

13. System for recharging on-board batteries in an electrically propelled aircraft according to any one of the preceding claims, for which the electrically propelled aircraft further comprises an on-board system for generating electrical energy from kerosene or hydrogen.

14. System for recharging on-board batteries in an electrically propelled aircraft according to any one of the preceding claims, for which the charging aircraft (1), the temporary electrical connection means (2, 3a, 3b, 4) for connecting the charging aircraft to the electrically propelled aircraft and the charge regulation device (5) in the electrically propelled aircraft are adapted to recharge all the packs of the on-board batteries at one time.

15. System for recharging on-board batteries in an electrically propelled aircraft according to any one of the preceding claims, for which the charging aircraft (1) is itself electrically propelled.

16. Method for recharging batteries of an electrically propelled aircraft by means of a system according to any one of the preceding claims, for which:
- the electrically propelled aircraft or its pilot detects a low state of charge of its batteries and contacts the closest charging aircraft;
- the electrically propelled aircraft or its pilot ensures a perfect knowledge of the diversion terrains in the refueling area and the calculation of the flight time to reach them and the power reserve remaining at the time of refueling;
- the electrically propelled aircraft approaches the charging aircraft which releases an electric cable to it equipped with temporary electrical connection means compatible with means of the electrically propelled aircraft;
- an electrical connection is established between the electrically propelled aircraft and the charging aircraft;
- the electrically propelled aircraft activates the process of recharging its on-board batteries;
- at the end of the recharging of the batteries, the electrically propelled aircraft orders the disconnection and the releasing of the electrical connection means.
